# EUROPEAN PATENT SPECIFICATION

(11) **EP 3 800 029 B1**
(45) Date of publication and mention of the grant of the patent: **20.07.2022**
(21) Application number: 20197321.1
(22) Date of filing: 21.09.2020
(51) Int. Cl.: B29C 45/14, B29C 45/17, B29C 31/00, B29C 37/00, B29C 45/42, B29C 45/02

(54) **RESIN MOLDING APPARATUS AND METHOD FOR MANUFACTURING RESIN MOLDED PRODUCT**
HARZFORMVORRICHTUNG UND VERFAHREN ZUR HERSTELLUNG EINES HARZFORMPRODUKTS
APPAREIL DE MOULAGE DE RÉSINE ET PROCÉDÉ DE FABRICATION D'UN PRODUIT MOULÉ EN RÉSINE

(30) Priority: 03.10.2019 JP 2019183038
(43) Date of publication of application: 07.04.2021
(73) Proprietor: Towa Corporation, Kyoto-shi, Kyoto 601-8105 (JP)
(72) Inventor: TAKEUCHI, Shin, Kyoto-shi, Kyoto 601-8105 (JP); MURAKAWA, Junichi, Kyoto-shi, Kyoto 601-8105 (JP); HARA, Akiyoshi, Kyoto-shi, Kyoto 601-8105 (JP); SUGIMOTO, Akihiro, Kyoto-shi, Kyoto 601-8105 (JP)
(74) Representative: Prüfer & Partner mbB Patentanwälte · Rechtsanwälte

(56) References cited:
- EP-A2- 1 147 870
- JP-A- H0 194 630
- JP-A- H06 166 048
- JP-A- H07 241 870
- TW-A- 201 316 559

## Description

### BACKGROUND OF THE INVENTION

### Field of the Invention

The present specification relates to a resin molding apparatus and a method for manufacturing a resin molded product.

### Description of the Background Art

In a resin molding apparatus, a substrate on which electronic components such as ICs (Integrated Circuits), transistors, and capacitors are mounted is prepared as an object to be molded. The electronic components on the substrate are sealed with resin by performing resin molding using transfer molding, compression molding, injection molding, or the like. In the resin molding apparatus, a large number of processes accompanying resin molding (such as a pre-process and a post-process) are performed.

In order to load and unload the object to be molded into and from a mold of a molding unit, a mechanism dedicated to loading and a mechanism dedicated to unloading may be separately provided. In this case, at least two mechanisms will exist, and it will be difficult to reduce the number of parts and driving mechanisms, downsize the apparatus, reduce the apparatus in weight, reduce energy consumption, and so forth. An apparatus disclosed in Japanese Patent Laid-Open No. 2011-023650 includes an operating arm of a six-axis articulated robot and a plurality of tools. Each tool corresponds to a step of a molding process. A tool for a step is sequentially replaced and attached to the operating arm and the molding process is thus performed. Further prior art is disclosed in Document TW201 316 559 A.

### SUMMARY OF THE INVENTION

In the apparatus disclosed in Japanese Patent Laid-Open No. 2011-023650, an object to be molded can be loaded into and unloaded from a molding unit by using a loading tool and an unloading tool attached to the operating arm of the six-axis articulated robot. Adopting a six-axis articulated structure, however, requires ensuring a sufficient space as a range in which the operating arm is movable, and it is thus not easy to downsize the apparatus.

It is an object of the present specification to disclose a resin molding apparatus having a configuration which facilitates downsizing the apparatus more than such conventional art as described above, and a method in which such a resin molding apparatus is used to perform resin molding for manufacturing a resin molded product.

A resin molding apparatus according to the present specification is a resin molding apparatus to resin-mold an object to be molded, the apparatus comprising: a molding unit including a mold and using the mold to perform resin molding; a transporting mechanism that reciprocates linearly in each of three orthogonal axial directions; a loader kit that is detachably attached to the transporting mechanism; and an unloader kit that is detachably attached to the transporting mechanism, in a state in which the unloader kit is not attached to the transporting mechanism and the loader kit is attached to the transporting mechanism, the object to be molded being loaded into the molding unit by the transporting mechanism and the loader kit, in a state in which the loader kit is not attached to the transporting mechanism and the unloader kit is attached to the transporting mechanism, after the object to be molded is molded in the molding unit to form a molded object, the molded object being unloaded from the molding unit by the transporting mechanism and the unloader kit.

A method for manufacturing a resin molded product according to the present specification is a method in which the resin molding apparatus is used to resin-mold an object to be molded for manufacturing a resin molded product, comprising: loading an object to be molded into the molding unit by the transporting mechanism and the loader kit; detaching the loader kit from the transporting mechanism and attaching the unloader kit to the transporting mechanism; and after the object to be molded is molded in the molding unit to form a molded object, unloading the molded object from the molding unit by the transporting mechanism and the unloader kit.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a plan view schematically showing an internal structure of a resin molding apparatus according to an embodiment.
Fig. 2 is a plan view showing the Fig. 1 resin molding apparatus without a transporting mechanism for the sake of illustration.
Fig. 3 is a cross-sectional view schematically showing a transporting mechanism, a loader kit, and an unloader kit included in the resin molding apparatus according to the embodiment.
Fig. 4 is a perspective view showing the transporting mechanism, a transporting path, and the like included in the resin molding apparatus according to the embodiment.
Fig. 5 is a flow chart for illustrating a method for manufacturing a resin molded product in an embodiment.

### DESCRIPTION OF THE PREFERRED EMBODIMENTS

Hereinafter, a resin molding apparatus according to an embodiment will be described with reference to the drawings. In the following description, identical or equivalent components are identically denoted and may not be described redundantly.

### (Resin Molding Apparatus 100)

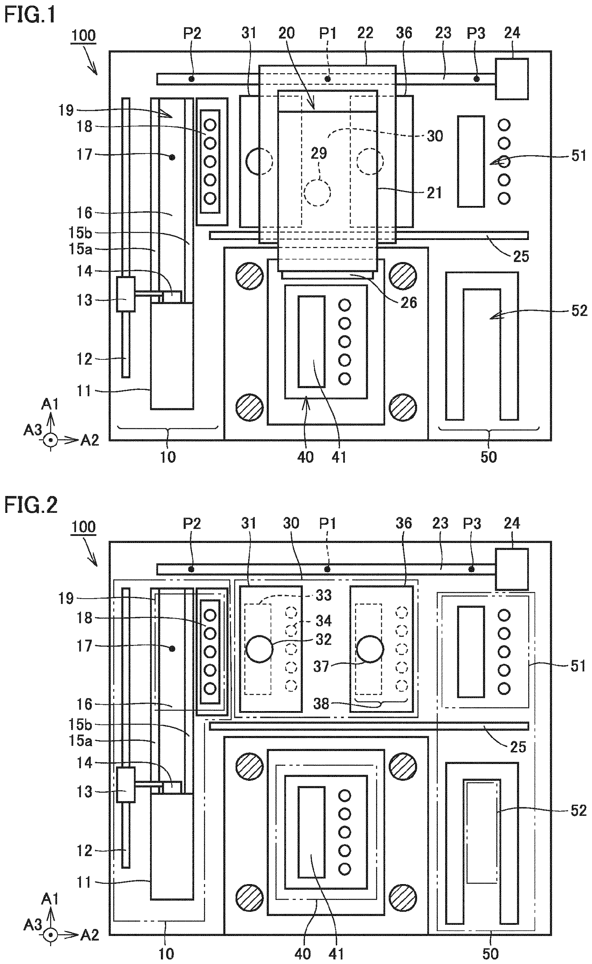

Fig. 1 is a plan view schematically showing an internal structure of a resin molding apparatus 100. Fig. 2 is a plan view showing the Fig. 1 resin molding apparatus 100 without a transporting mechanism 20 for the sake of illustration. As shown in Figs. 1 and 2, resin molding apparatus 100 includes a feed unit 10, transporting mechanism 20 (see Fig. 1), a kit arrangement section 30, a loader kit 31, an unloader kit 36, a molding unit 40, and an ejection unit 50.

As will be described hereinafter, transporting mechanism 20 can reciprocate linearly in each of three orthogonal axial directions. The three axial directions are composed of a first axial direction A1, a second axial direction A2, and a third axial direction A3. First axial direction A1 is a direction extending in the vertical direction in the plane of the sheet of Figs. 1 and 2, and corresponds for example to the direction of the depth of resin molding apparatus 100. Second axial direction A2 is a direction extending in the lateral direction in the plane of the sheet of Figs. 1 and 2, and corresponds for example to the direction of the width of resin molding apparatus 100. Third axial direction A3 is a direction extending to be perpendicular to the plane of the sheet of Figs. 1 and 2, and corresponds for example to the direction of the height of resin molding apparatus 100. Transporting mechanism 20 can reciprocate in the three axial directions using, for example, a first linear motion mechanism movable in first axial direction A1, a second linear motion mechanism movable in second axial direction A2, and a third linear motion mechanism movable in third axial direction A3.

### (Molding Unit 40 and Ejection Unit 50)

Molding unit 40 includes a mold 41. While Figs. 1 and 2 show a lower mold half as mold 41, the mold also includes an upper mold half arranged to face the lower mold half. In molding unit 40, an object to be molded is resin-molded by these mold halves.

Ejection unit 50 receives a molded object (also referred to as a resin molded product) ejected from molding unit 40. Ejection unit 50 includes a degating unit 51 and an out-magazine unit 52. The molded object is transported from molding unit 40 to out-magazine unit 52 via the position of kit arrangement section 30, which will be described hereinafter, and degating unit 51. Degating unit 51 and out-magazine unit 52 are aligned in first axial direction A1. Out-magazine unit 52 and molding unit 40 are aligned in second axial direction A2.

### (Feed unit 10)

In feed unit 10, an object which is to be loaded into molding unit 40 to be molded therein (in other words, an object scheduled to be loaded into molding unit 40 to be molded therein) is arranged. The object to be molded is a substrate on which an electronic component is mounted. The substrate can for example be a lead frame or a printed circuit board, and in addition to these, can also be a metal substrate, a resin substrate, a ceramic substrate, and the like.

In feed unit 10 of the present embodiment are provided an in-magazine unit 11, a driving mechanism 12, a grip feeder 13, transporting guides 15a and 15b, a transporting path 16, a substrate arrangement section 17, a resin lifting unit 18, and an alignment unit 19.

In-magazine unit 11 and molding unit 40 are aligned in second axial direction A2. A plurality of substrates are accommodated in in-magazine unit 11. Driving mechanism 12 extends in first axial direction A1 near the location of an end of the apparatus (resin molding apparatus 100) in second axial direction A2 (in this case, the location of the left end of the apparatus). Grip feeder 13 reciprocates in first axial direction A1 by driving mechanism 12.

Transporting guides 15a and 15b extend in parallel in first axial direction A1, and transporting path 16 is formed between transporting guides 15a and 15b. By a pusher and a tip gripping unit 14 of grip feeder 13, a substrate is extracted from in-magazine unit 11 onto transporting path 16.

In the present embodiment, in-magazine unit 11 and alignment unit 19 are aligned in first axial direction A1. Alignment unit 19 includes substrate arrangement section 17 and a resin lifting unit 18. Transporting path 16 is provided between in-magazine unit 11 and alignment unit 19 (more specifically, substrate arrangement section 17), and the substrate extracted from in-magazine unit 11 is transported in first axial direction A1 along transporting path 16 to substrate arrangement section 17 in alignment unit 19.

Resin lifting unit 18 is provided at a position adjacent to substrate arrangement section 17 in second axial direction A2. In resin lifting unit 18, a resin material is lifted from a predetermined stocker in third axial direction A3 so as to be positioned at substantially the same level as the substrate in substrate arrangement section 17. In substrate arrangement section 17 inside alignment unit 19, and resin lifting unit 18, the substrate and the resin material are positioned and thus arranged. As the resin material, for example, a tablet-shaped resin formed by pressing and solidifying a powdery thermosetting resin can be used.

### (Kit Arrangement Section 30, Loader Kit 31 and Unloader Kit 36)

Loader kit 31 is detachably attached to transporting mechanism 20, and unloader kit 36 is also detachably attached to transporting mechanism 20. It is recommendable to provide each of loader kit 31 and transporting mechanism 20 with a device capable of transmitting and receiving electrical signals in a non-contact manner. Further, as the device capable of transmitting and receiving electrical signals, a device having a function to enable connection of compressed air can also be used between loader kit 31 and transporting mechanism 20. The same applies to unloader kit 36 and transporting mechanism 20.

Kit arrangement section 30 is a space provided in the apparatus in order to arrange loader kit 31 detached from transporting mechanism 20 and unloader kit 36 detached from transporting mechanism 20. In the present embodiment, alignment unit 19 and kit arrangement section 30 are aligned in second axial direction A2.

When feed unit 10, kit arrangement section 30, and ejection unit 50 are seen in a plan view, loader kit 31 is arranged in kit arrangement section 30 on the side of feed unit 10, and unloader kit 36 is arranged in kit arrangement section 30 on the side of ejection unit 50. When molding unit 40 and kit arrangement section 30 are seen in a plan view, molding unit 40 and kit arrangement section 30 are aligned in first axial direction A1, and feed unit 10 and ejection unit 50 are arranged opposite to each other in second axial direction A2 with kit arrangement section 30 interposed.

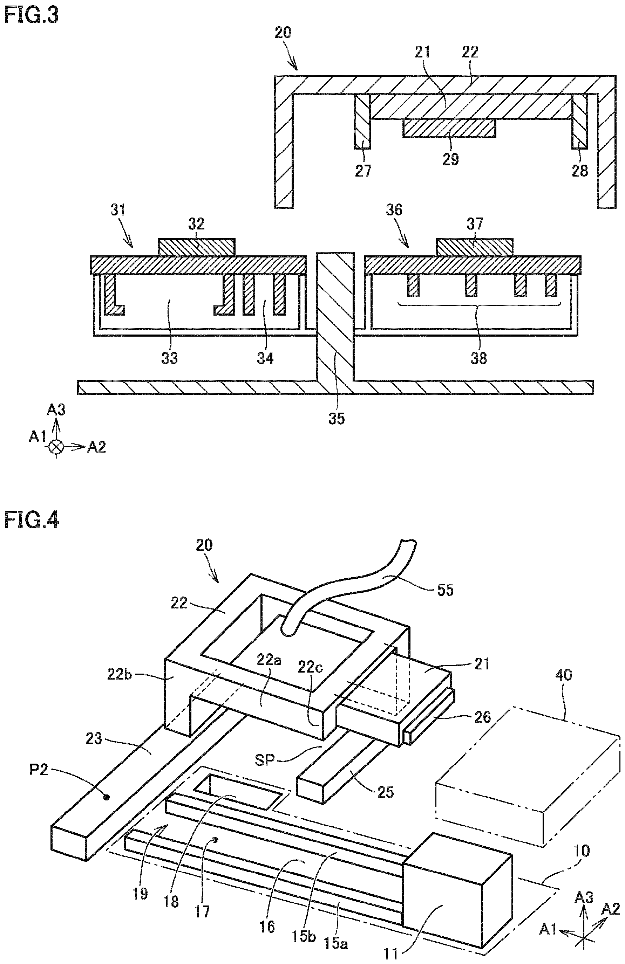

Fig. 3 is a cross-sectional view schematically showing transporting mechanism 20, loader kit 31, and unloader kit 36 included in resin molding apparatus 100. As shown in Figs. 2 and 3, loader kit 31 includes a connector 32, a substrate holder 33, and a resin material holder 34. Loader kit 31 is detachably attached via connector 32 to a connector 29 of transporting mechanism 20. In a state in which loader kit 31 is arranged over alignment unit 19, the substrate to be molded and the resin material are picked up from alignment unit 19 by substrate holder 33 and resin material holder 34 and held thereby.

Unloader kit 36 has a connector 37 and a holder 38. Unloader kit 36 is detachably attached to connector 29 of transporting mechanism 20 via connector 37. After the mold is opened, in a state in which unloader kit 36 is arranged over the lower mold half of mold 41, the object that has been molded (or a resin molded product) is picked up from the lower mold half of mold 41 by holder 38 and held thereby.

### (Transporting mechanism 20)

Fig. 4 is a perspective view showing transporting mechanism 20, transporting path 16, and the like included in resin molding apparatus 100. As shown in Figs. 1, 3 and 4, transporting mechanism 20 includes a first main body 21, a second main body 22, a driving unit 23, a motor 24 (a driving source), a guide member 25, a cleaner unit 26, elevating mechanisms 27, 28, and connector 29. In transporting mechanism 20, first main body 21, second main body 22, and elevating mechanisms 27 and 28 can operate to cause connector 29 to reciprocate linearly in each of the three orthogonal axial directions.

Specifically, first main body 21 and second main body 22 are assembled to each other so as to be relatively movable in first axial direction A1. First main body 21 is driven by a driving mechanism (not shown) to reciprocate relative to second main body 22 in first axial direction A1. The driving mechanism can for example be a servomotor and a rack and pinion gear mechanism. The driving mechanism as used herein can be represented as being equivalent to the first one of the first, second and third linear motion mechanisms that is movable in first axial direction A1.

Second main body 22 supports first main body 21. Connector 29 is provided on the lower side of first main body 21 via elevating mechanisms 27 and 28 (see Fig. 3). Connector 29 functions as a so-called tool changer. An air cylinder can be used as elevating mechanisms 27, 28. Loader kit 31 and unloader kit 36 are detachably attached to connector 29. Further, elevating mechanisms 27 and 28 can be used for movement in third axial direction A3 when arranging an object to be molded on the lower mold half of mold 41 in a state with loader kit 31 attached to transporting mechanism 20 and when picking up a molded object from the lower mold half of mold 41 in a state with unloader kit 36 attached to transporting mechanism 20.

Although elevating mechanisms 27 and 28 in the configuration shown in Fig. 3 are arranged on opposite sides with first main body 21 interposed, they are not limited in number or position as shown in Fig. 3. For example, a single elevating mechanism may be provided, or an elevating mechanism may be provided at a position deeper in the plane of the sheet of Fig. 3 with respect to first main body 21. Any number of elevating mechanisms can be used at any locations insofar as they can cause first main body 21 to ascend and descend with respect to second main body 22. The elevating mechanism in this case can be represented as being equivalent to the third one of the first, second and third linear motion mechanisms that is movable in third axial direction A3.

Driving unit 23 is composed for example of a timing belt and cooperates with guide member 25 to support second main body 22 from below. Driving unit 23 and guide member 25 both extend in second axial direction A2 in parallel. As driving unit 23 is driven by motor 24 (a servo motor), second main body 22 reciprocates in second axial direction A2 together with first main body 21. Therefore, of the first, second and third linear motion mechanisms described above, the second linear motion mechanism movable in second axial direction A2 can be represented as being composed of driving unit 23 and guide member 25.

In a state in which unloader kit 36 is not attached to transporting mechanism 20 and loader kit 31 is attached on transporting mechanism 20, an object to be molded is loaded into molding unit 40 by transporting mechanism 20 and loader kit 31. In a state in which loader kit 31 is not attached to transporting mechanism 20 and unloader kit 36 is attached to transporting mechanism 20, a molded object is unloaded from molding unit 40 by transporting mechanism 20 and unloader kit 36.

In the present embodiment, a first position P1, a second position P2, and a third position P3 are defined. First position P1 is located on a side opposite in first axial direction A1 to molding unit 40 with kit arrangement section 30 interposed. In other words, kit arrangement section 30 is located between first position P1 and molding unit 40 in first axial direction A1. Second position P2 is located on a side opposite in the same direction to in-magazine unit 11 with alignment unit 19 interposed. Third position P3 is located on a side opposite in the same direction to out-magazine unit 52 with degating unit 51 interposed.

Driving unit 23 extends at least in second axial direction A2 between first position P1 and second position P2. Driving unit 23 in the present embodiment extends in second axial direction A2 between second position P2 and third position P3. As shown in Fig. 4, second main body 22 has a portion 22a. Portion 22a is a portion of second main body 22 located on the side of feed unit 10 in second axial direction A2. Portion 22a of second main body 22 has an L-shape in a side view and is supported in a form of a cantilever beam by driving unit 23 so that second main body 22 can be positioned over transporting path 16.

In other words, portion 22a of second main body 22 (see Fig. 4) has a region 22b facing away from molding unit 40, and region 22b is connected to driving unit 23 and supported by driving unit 23 from below. In contrast, portion 22a has a region 22c facing molding unit 40, and region 22c is separated upward from guide member 25, and a space SP (see Fig. 4) is formed below region 22c. In a state with second main body 22 arranged at a position corresponding to second position P2, second main body 22 and portion 22a thereof are located over transporting path 16. In this state, transporting path 16 is arranged in space SP, and transporting path 16 and second main body 22 do not interfere with each other. With this configuration, the space is effectively utilized.

### (Cleaner Unit 26)

Cleaner unit 26 includes an internal duct extending in first axial direction A1, a brush, a suction port and so forth. The brush and the suction port are provided at an end of first main body 21 closer to molding unit 40. Resin molding apparatus 100 further includes a suction duct 55 (see Fig. 4). In a state in which suction duct 55 is connected to the internal duct, a negative pressure is generated in a vicinity of the brush and the suction port. In this state, cleaner unit 26 cleans the mold arranged in molding unit 40.

When transporting mechanism 20 moves in a direction to enter and exit molding unit 40, suction duct 55 can be brought into a connected state in which suction duct 55 is connected to cleaner unit 26. Further, before and after transporting mechanism 20 enters and exits molding unit 40 (that is, in a state before transporting mechanism 20 enters molding unit 40 and a state after transporting mechanism 20 exits molding unit 40) when transporting mechanism 20 moves in second axial direction A2 that is a direction intersecting a direction in which transporting mechanism 20 enters and exits molding unit 40, suction duct 55 is brought into a disconnected state in which suction duct 55 is not connected to cleaner unit 26.

As an example, when transporting mechanism 20 and loader kit 31 enter and exit molding unit 40 in order to load an object to be molded into molding unit 40, suction duct 55 is not connected to the internal duct of cleaner unit 26. When transporting mechanism 20 and unloader kit 36 enter and exit molding unit 40 in order to unload a molded object from molding unit 40, suction duct 55 is connected to the internal duct of cleaner unit 26. Therefore, the mold will be cleaned when transporting mechanism 20 and unloader kit 36 enter molding unit 40, and the mold will not be cleaned when transporting mechanism 20 and loader kit 31 enter molding unit 40.

Alternatively, suction duct 55 may be connected to cleaner unit 26 when transporting mechanism 20 and loader kit 31 enter and exit molding unit 40, and suction duct 55 may be disconnected from cleaner unit 26 when transporting mechanism 20 and unloader kit 36 enter and exit molding unit 40. In this example, the mold will be cleaned when transporting mechanism 20 and loader kit 31 enter molding unit 40, and the mold will not be cleaned when transporting mechanism 20 and unloader kit 36 enter molding unit 40. Further, it is also possible to set such that suction duct 55 is connected to cleaner unit 26 to clean the mold both when transporting mechanism 20 and loader kit 31 enter molding unit 40 and when transporting mechanism 20 and unloader kit 36 enter molding unit 40.

In any of the configurations illustrated as examples, when transporting mechanism 20 moves in second axial direction A2 before and after transporting mechanism 20 enters and exits molding unit 40 (that is, when transporting mechanism 20 moves in second axial direction A2 before transporting mechanism 20 enters molding unit 40 and when transporting mechanism 20 moves in second axial direction A2 after transporting mechanism 20 exits molding unit 40), suction duct 55 is set in a state in which suction duct 55 is disconnected from cleaner unit 26.

### [Function and Effect]

As has been described above, in resin molding apparatus 100, transporting mechanism 20 that reciprocates linearly in each of three axial directions is used. Transporting mechanism 20 reciprocates linearly only in three axial directions consisting of first axial direction A1, second axial direction A2, and third axial direction A3. While loader kit 31 and unloader kit 36 are selectively attached to transporting mechanism 20, an object to be molded is loaded into and unloaded from molding unit 40.

A single transporting mechanism 20 can be used to implement loading and unloading an object to be molded into and from molding unit 40, and when this is compared with providing two mechanisms, that is, a mechanism dedicated to loading and a mechanism dedicated to unloading, separately, the former helps to reduce the apparatus in size. Further, when a six-axis articulated operating arm is compared with transporting mechanism 20 that reciprocates linearly in each of the three axial directions, the latter facilitates setting a small space for a space to be provided as a range in which transporting mechanism 20 is movable, and thus allows the apparatus to be simplified and downsized.

As has been described above, in resin molding apparatus 100, molding unit 40 and kit arrangement section 30 are aligned in first axial direction A1, and feed unit 10 and ejection unit 50 are arranged on opposite sides in second axial direction A2 with kit arrangement section 30 interposed. Kit arrangement section 30 and molding unit 40 are arranged between feed unit 10 and ejection unit 50. These layout configurations can further reduce a distance required to be traveled by transporting mechanism 20 for resin molding (that is, a length of a lead required for resin molding) and a distance traveled by the substrate, and can achieve more efficient production.

As has been described above, in resin molding apparatus 100, in-magazine unit 11 and alignment unit 19 are aligned in first axial direction A1, in-magazine unit 11 and molding unit 40 are aligned in second axial direction A2, and alignment unit 19 and kit arrangement section 30 are aligned in second axial direction A2. This configuration can also further reduce a distance required to be traveled by transporting mechanism 20 for resin molding (that is, a length of a lead) and a distance traveled by the substrate, and can achieve more efficient production.

As has been described above, in resin molding apparatus 100, portion 22a of second main body 22 of transporting mechanism 20 located on the side of feed unit 10 in second axial direction A2 is supported in a form of a cantilever beam by driving unit 23 so that second main body 22 can be located over transporting path 16. Since second main body 22 can move and reach exactly above transporting path 16 in a manner avoiding transporting path 16, effectively using a space is contemplated by the configuration of interest, and a range in which second main body 22 is movable can be ensured efficiently in laying out and the apparatus can further be downsized.

As has been described above, in resin molding apparatus 100, suction duct 55 can be brought into a connected state in which suction duct 55 is connected to cleaner unit 26 (or an internal duct) when transporting mechanism 20 moves in a direction to enter and exit molding unit 40. Further, before and after transporting mechanism 20 enters and exits molding unit 40 when transporting mechanism 20 moves in a direction (second axial direction A2) intersecting the direction in which transporting mechanism 20 enters and exits molding unit 40, suction duct 55 is brought into a disconnected state in which suction duct 55 is disconnected from cleaner unit 26. Therefore, in a state in which suction duct 55 is in a state in which it is disconnected from cleaner unit 26 and arranged at a position away from transporting mechanism 20 (for example, in a state in which suction duct 55 is retracted upward), a space in which transporting mechanism 20 can move is formed around transporting mechanism 20. When this is compared with a case where suction duct 55 is constantly connected to transporting mechanism 20, the former facilitates creating a useful space around transporting mechanism 20, and effectively using the space allows the apparatus to be further downsized.

Further, when an object to be molded is loaded into molding unit 40 or when a molded object is unloaded from molding unit 40, cleaner unit 26 may not clean the mold and suction duct 55 may not be connected to cleaner unit 26. As suction duct 55 is not connected to cleaner unit 26, energy consumption required for a loading operation can be reduced. Energy consumption required for movement can be reduced not only in the loading operation but also when transporting mechanism 20 moves in second axial direction A2.

### (Method for Manufacturing Resin Molded Product)

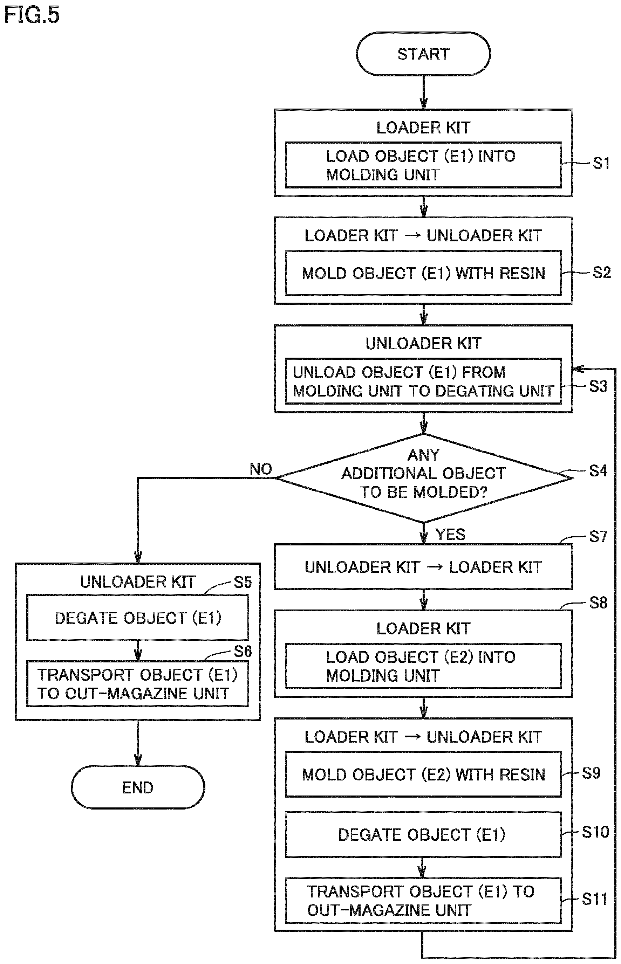

Fig. 5 is a flow chart for illustrating a method for manufacturing a resin molded product in an embodiment. Initially, in step S1, transporting mechanism 20 moves to kit arrangement section 30 to attach loader kit 31. In doing so, for example, connectors 29 and 32 (see Fig. 3) are caused to face each other, and first main body 21 is lowered and loader kit 31 is raised using a lifter 35 (see Fig. 3).

A substrate is pushed out of in-magazine unit 11 by the pusher and transported to substrate arrangement section 17 (or alignment unit 19) by driving mechanism 12 and grip feeder 13. A resin material is also transported to alignment unit 19 by resin lifting unit 18. The substrate, or an object to be molded, is heated by a preheating mechanism.

Thereafter, in a state in which loader kit 31 is arranged over alignment unit 19, the object to be molded or the substrate and the resin material are picked up from alignment unit 19 by substrate holder 33 and resin material holder 34 and held thereby.

The substrate and the resin material are transported by transporting mechanism 20 and loader kit 31 from alignment unit 19 via the position of kit arrangement section 30 and loaded into molding unit 40. For the sake of illustration, the substrate loaded into molding unit 40 at this point in time is defined as an object E1 to be molded. When object E1 to be molded and the resin material are transported by loader kit 31 from the position of kit arrangement section 30 and loaded into molding unit 40, it is recommendable that suction duct 55 be removed from cleaner unit 26 of transporting mechanism 20.

In step S2, object E1 to be molded is resin-molded in molding unit 40. While the resin molding is performed, loader kit 31 is detached from transporting mechanism 20, and unloader kit 36 is attached to transporting mechanism 20. After the molding process is completed, the mold of molding unit 40 is opened, and unloader kit 36 enters molding unit 40. In doing so, suction duct 55 is connected to cleaner unit 26 of transporting mechanism 20, and cleaner unit 26 has the suction port, the brush and the like in communication with suction duct 55.

In step S3, in a state in which unloader kit 36 is arranged over the lower mold half of mold 41, object E1 that has been molded (or a resin molded product) is picked up from the lower mold half of mold 41 by holder 38 and held thereby. Object E1 molded is unloaded by transporting mechanism 20 and unloader kit 36 from molding unit 40 to degating unit 51 via the position of kit arrangement section 30. In unloading the object, cleaning the upper and lower mold halves by cleaner unit 26 is also performed.

Subsequently, the control proceeds to step S4, and when, following object E1 molded, there is another, additional object (E2) to be resin-molded, then, the control proceeds to a flow for YES, whereas when there is no additional object to be resin-molded, the control proceeds to a flow for NO.

In response to NO in step S4, object E1 molded is degated in degating unit 51 (step S5). Object E1 molded thus degated is further transported by unloader kit 36 from degating unit 51 to out-magazine unit 52 (step S6). Unloader kit 36 is detached from transporting mechanism 20, as appropriate, and loader kit 31 is again attached to transporting mechanism 20, and the flow ends.

In response to YES in step S4, after transporting mechanism 20 transports object E1 molded from molding unit 40 to degating unit 51, object E1 molded is not degated, and transporting mechanism 20 immediately moves to kit arrangement section 30. Unloader kit 36 is detached from transporting mechanism 20, and loader kit 31 is attached to transporting mechanism 20 (step S7).

Through a flow similar to step S1, object E2 to be molded subsequent to object E1 molded is loaded into molding unit 40 (step S8). Object E2 to be molded is resin-molded in molding unit 40 (step S9). While object E2 to be molded is resin-molded, transporting mechanism 20 moves to kit arrangement section 30. Loader kit 31 is detached from transporting mechanism 20, and unloader kit 36 is attached to transporting mechanism 20.

Object E1 molded that has been transported to degating unit 51 in step S3 is degated (step S10). Object E1 molded thus degated is further transported by unloader kit 36 from degating unit 51 to out-magazine unit 52 (step S11). After step S11, the control returns to step S3 and repeats a similar process for object E2 molded and a following object to be molded.

Thus, the method for manufacturing a resin molded product according to the present embodiment includes a first step of unloading object (E1) molded from molding unit 40 to degating unit 51 by unloader kit 36 (step S3) and a second step of transporting object (E1) molded that has been degated from degating unit 51 to out-magazine unit 52 (step S11), and further includes between the first and second steps the step of detaching unloader kit 36 from transporting mechanism 20 and attaching loader kit 31 to transporting mechanism 20 to load an additional object (E2) to be molded and a resin material into molding unit 40 to resin-mold the object (step S9). According to this configuration, while resin molding is performed by molding unit 40, another necessary operation (herein, degating object (E1) previously resin-molded, or the like) can be performed, and each element's availability, and hence productivity can be increased.

While an embodiment of the present invention has been be described, it should be understood that the presently disclosed embodiment has been described for the purpose of illustration only and in a non-restrictive manner in any respect. The scope of the present invention is defined by the terms of the claims.

## Claims

1. A resin molding apparatus (100) that resin-molds an object to be molded, comprising:
a molding unit (40) including a mold (41), wherein the mold (41) is configured to perform resin molding; **characterized by**
a transporting mechanism (20) that is configured to reciprocate linearly in each of three orthogonal axial directions;
a loader kit (31) that is detachably attached to the transporting mechanism (20); and
an unloader kit (36) that is detachably attached to the transporting mechanism (20),
wherein the transporting mechanism (20) and the loader kit (31) are configured such that, in a state in which the unloader kit (36) is not attached to the transporting mechanism (20) and the loader kit (31) is attached to the transporting mechanism (20), the object to be molded is loaded into the molding unit (40) by the transporting mechanism (20) and the loader kit (31),
wherein the transporting mechanism (20) and the unloader kit (36) are configured such that, in a state in which the loader kit (31) is not attached to the transporting mechanism (20) and the unloader kit (36) is attached to the transporting mechanism (20), after the object to be molded is molded in the molding unit to form a molded object (40), the molded object is unloaded from the molding unit (40) by the transporting mechanism (20) and the unloader kit (36).

2. The resin molding apparatus according to claim 1, further comprising:
a kit arrangement section in which arranged are the loader and unloader kits detached from the transporting mechanism;
a feed unit in which arranged is the object to be molded, which is to be loaded into the molding unit; and
an ejection unit in which arranged is the molded object, which is unloaded from the molding unit, wherein
when the molding unit (40) and the kit arrangement section (30) are seen in a plan view, the molding unit (40) and the kit arrangement section (30) are aligned in a first axial direction (A1), and the feed unit (10) and the ejection unit (50) are arranged on opposite sides in a second axial direction (A2) orthogonal to the first axial direction (A1) with the kit arrangement section (30) interposed.

3. The resin molding apparatus according to claim 2, wherein
the object to be molded includes a substrate having an electronic component mounted thereon,
the feed unit (10) includes an in-magazine unit (11) that accommodates the substrate, and an alignment unit (19) in which the substrate is positioned and arranged,
the in-magazine unit (11) and the alignment unit (19) are aligned in the first axial direction (A1),
the in-magazine unit (11) and the molding unit (40) are aligned in the second axial direction (A2), and
the alignment unit (19) and the kit arrangement section (30) are aligned in the second axial direction (A2).

4. The resin molding apparatus according to claim 3, further comprising a transporting path (16), wherein
the transporting path (16) is provided between the in-magazine unit (11) and the alignment unit (19), and the substrate from the in-magazine unit (11) is transported in the first axial direction (A1) along the transporting path (16),
the transporting mechanism (20) includes
a first main body (21) that is configured to reciprocate in the first axial direction (A1),
a connector (29) that is provided on a lower side of the first main body (21) and allows the loader kit (31) and the unloader kit (36) to be detachably attached thereto,
a second main body (22) that supports the first main body (21), and
a driving unit (23) that supports the second main body (22) from below and causes the second main body (22) to reciprocate in the second axial direction (A2),
the driving unit (23) extends in at least the second axial direction (A2) between a first position (P1) located on a side opposite in the first axial direction (A1) to the molding unit (40) with the kit arrangement section (30) interposed and a second position (P2) located on a side opposite in the first axial direction (A1) to the in-magazine unit (11) with the alignment unit (19) interposed, and
the second main body (22) has a portion (22a) located on a side of the feed unit (10) in the second axial direction (A2) and supported in a form of a cantilever beam by the driving unit (23) so that the second main body (22) can be located over the transporting path (16).

5. The resin molding apparatus according to any one of claims 1 to 4, further comprising a suction duct (55), wherein
the transporting mechanism (20) includes a cleaner unit (26) to clean the mold (41),
when the transporting mechanism (20) is configured to move in a direction to enter and exit the molding unit (40), the suction duct (55) can be in a connected state in which the suction duct (55) is connected to the cleaner unit (26), and
before and after the transporting mechanism (20) enters and exits the molding unit (40) when the transporting mechanism (20) is configured to move in a direction intersecting the direction in which the transporting mechanism (20) enters and exits the molding unit (40), the suction duct (55) is in a disconnected state in which the suction duct (55) is disconnected from the cleaner unit (26).

6. A method using the resin molding apparatus (100) according to any one of claims 1 to 5 to resin-mold an object to be molded for manufacturing a resin molded product, the method being **characterized by** the following steps:
loading the object to be molded into the molding unit (40) by the transporting mechanism (20) and the loader kit (31);
detaching the loader kit (31) from the transporting mechanism (20) and attaching the unloader kit (36) to the transporting mechanism (20); and
after the object to be molded is molded in the molding unit to form a molded object (40), unloading the molded object from the molding unit (40) by the transporting mechanism (20) and the unloader kit (36).

7. The method for manufacturing a resin molded product according to claim 6, comprising:
a first step of unloading the molded object from the molding unit (40) to a degating unit (51) by the unloader kit (36);
after the molded object is degated in the degating unit (51), a second step of transporting the degated, molded object from the degating unit (51) to an out-magazine unit (52); and
between the first and second steps, a step of detaching the unloader kit (36) from the transporting mechanism (20) and attaching the loader kit (31) to the transporting mechanism (20) to load an additional object to be molded into the molding unit (40) to resin-mold the additional object.

## Patentansprüche

1. Harzformvorrichtung (100), die einen zu formenden Gegenstand mit Harz formt, umfassend:
eine Formungseinheit (40), die eine Form (41) aufweist, wobei die Form (41) dafür ausgebildet ist, ein Harzformen auszuführen; **gekennzeichnet durch**
einen Transportmechanismus (20), der dafür ausgebildet ist, sich linear in jeder von drei orthogonalen axialen Richtungen hin und her zu bewegen;
eine Ladeeinrichtung (31), die abnehmbar an dem Transportmechanismus (20) angebracht ist; und
eine Entladeeinrichtung (36), die abnehmbar an dem Transportmechanismus (20) angebracht ist,
wobei der Transportmechanismus (20) und die Ladeeinrichtung (31) so ausgebildet sind, dass in einem Zustand, in dem die Entladeeinrichtung (36) nicht an dem Transportmechanismus (20) angebracht ist und die Ladeeinrichtung (31) an dem Transportmechanismus (20) angebracht ist, der zu formende Gegenstand durch den Transportmechanismus (20) und die Ladeeinrichtung (31) in die Formungseinheit (40) geladen wird,
wobei der Transportmechanismus (20) und die Entladeeinrichtung (36) so ausgebildet sind, dass in einem Zustand, in dem die Ladeeinrichtung (31) nicht an dem Transportmechanismus (20) angebracht ist und die Entladeeinrichtung (36) an dem Transportmechanismus (20) angebracht ist, nachdem der zu formende Gegenstand in der Formungseinheit geformt wurde, um einen geformten Gegenstand (40) zu bilden, der geformte Gegenstand durch den Transportmechanismus (20) und die Entladeeinrichtung (36) aus der Formungseinheit (40) entladen wird.

2. Harzformvorrichtung nach Anspruch 1, ferner umfassend:
einen Einrichtungsanordnungsabschnitt, in dem die von dem Transportmechanismus abgelösten Lade- und Entladeeinrichtungen angeordnet sind;
eine Zuführeinheit, in der der zu formende Gegenstand angeordnet ist, der in die Formungseinheit zu laden ist, und
eine Auswurfeinheit, in der der geformte Gegenstand angeordnet ist, der aus der Formungseinheit entladen wird, wobei,
wenn die Formungseinheit (40) und der Einrichtungsanordnungsabschnitt (30) in einer Draufsicht gesehen werden, die Formungseinheit (40) und der Einrichtungsanordnungsabschnitt (30) in einer ersten axialen Richtung (A1) ausgerichtet sind, und die Zuführeinheit (10) und die Auswurfeinheit (50) auf gegenüberliegenden Seiten in einer zweiten axialen Richtung (A2) orthogonal zu der ersten axialen Richtung (A1) angeordnet sind, wobei der Einrichtungsanordnungsabschnitt (30) dazwischen angeordnet ist.

3. Harzformvorrichtung nach Anspruch 2, wobei
der zu formende Gegenstand ein Substrat mit einer darauf angebrachten elektronischen Komponente enthält,
die Zuführeinheit (10) eine In-Magazin-Einheit (11) umfasst, die das Substrat aufnimmt, und eine Ausrichtungseinheit (19), in der das Substrat positioniert und angeordnet wird,
die In-Magazin-Einheit (11) und die Ausrichtungseinheit (19) in der ersten axialen Richtung (A1) ausgerichtet sind,
die In-Magazin-Einheit (11) und die Formungseinheit (40) in der zweiten axialen Richtung (A2) ausgerichtet sind, und
die Ausrichtungseinheit (19) und der Einrichtungsanordnungsabschnitt (30) in der zweiten axialen Richtung (A2) ausgerichtet sind.

4. Harzformvorrichtung nach Anspruch 3, ferner umfassend einen Transportweg (16), wobei
der Transportweg (16) zwischen der In-Magazin-Einheit (11) und der Ausrichtungseinheit (19) vorgesehen ist und das Substrat von der In-Magazin-Einheit (11) in der ersten axialen Richtung (A1) entlang des Transportwegs (16) transportiert wird,
wobei der Transportmechanismus (20) umfasst:
einen ersten Hauptkörper (21), der so ausgebildet ist, dass er sich in der ersten axialen Richtung (A1) hin und her bewegt,
ein Verbindungsstück (29), das an einer unteren Seite des ersten Hauptkörpers (21) vorgesehen ist und es ermöglicht, die Ladeeinrichtung (31) und die Entladeeinrichtung (36) lösbar daran anzubringen,
einen zweiten Hauptkörper (22), der den ersten Hauptkörper (21) trägt, und
eine Antriebseinheit (23), die den zweiten Hauptkörper (22) von unten stützt und den zweiten Hauptkörper (22) dazu veranlasst, sich in der zweiten axialen Richtung (A2) hin und her zu bewegen,
wobei sich die Antriebseinheit (23) zumindest in der zweiten axialen Richtung (A2) erstreckt zwischen einer ersten Position (P1), die sich auf einer Seite befindet, die in der ersten axialen Richtung (A1) der Formungseinheit (40) gegenüberliegt, wobei der Einrichtungsanordnungsabschnitt (30) dazwischen angeordnet ist, und einer zweiten Position (P2), die sich auf einer Seite befindet, die in der ersten axialen Richtung (A1) der In-Magazin-Einheit (11) gegenüberliegt, wobei die Ausrichtungseinheit (19) dazwischen angeordnet ist, und
wobei der zweite Hauptkörper (22) einen Abschnitt (22a) aufweist, der auf einer Seite der Zuführeinheit (10) in der zweiten axialen Richtung (A2) angeordnet ist und in Form eines freitragenden Balkens von der Antriebseinheit (23) unterstützt wird, so dass der zweite Hauptkörper (22) über dem Transportweg (16) angeordnet werden kann.

5. Harzformvorrichtung nach einem der Ansprüche 1 bis 4, ferner umfassend eine Saugleitung (55),
wobei der Transportmechanismus (20) eine Reinigungseinheit (26) zum Reinigen der Form (41) umfasst,
wobei die Saugleitung (55) in einem verbundenen Zustand sein kann, in dem die Saugleitung (55) mit der Reinigungseinheit (26) verbunden ist, wenn der Transportmechanismus (20) so ausgebildet ist, dass er sich in einer Richtung zum Eintreten in die und zum Verlassen der Formungseinheit (40) bewegt, und
wobei sich die Saugleitung (55) in einem getrennten Zustand befindet, in dem die Saugleitung (55) von der Reinigungseinheit (26) getrennt ist, bevor und nachdem der Transportmechanismus (20) in die Formungseinheit (40) eintritt und diese verlässt, wenn der Transportmechanismus (20) so ausgebildet ist, dass er sich in einer Richtung bewegt, die die Richtung schneidet, in der der Transportmechanismus (20) in die Formungseinheit (40) eintritt und diese verlässt.

6. Verfahren, das die Harzformvorrichtung (100) nach einem der Ansprüche 1 bis 5 verwendet, um einen zu formenden Gegenstand mit Harz zu formen, um ein Harzgeformtes Produkt herzustellen, wobei das Verfahren durch die folgenden Schritte gekennzeichnet ist:
Laden des zu formenden Gegenstands in die Formungseinheit (40) durch den Transportmechanismus (20) und die Ladeeinrichtung (31);
Lösen der Ladeeinrichtung (31) von dem Transportmechanismus (20) und Anbringen der Entladeeinrichtung (36) an dem Transportmechanismus (20); und,
nachdem der zu formende Gegenstand in der Formungseinheit geformt worden ist, um einen geformten Gegenstand (40) zu bilden, Entladen des geformten Gegenstands aus der Formungseinheit (40) durch den Transportmechanismus (20) und die Entladeeinrichtung (36).

7. Verfahren zur Herstellung eines Harz-geformten Produkts nach Anspruch 6, umfassend:
einen ersten Schritt des Entladens des geformten Gegenstands aus der Formungseinheit (40) in eine Entformungseinheit (51) durch die Entladeeinrichtung (36);
nachdem der geformte Gegenstand in der Entformungseinheit (51) entformt worden ist, einen zweiten Schritt des Transportierens des entformten, geformten Gegenstands von der Entformungseinheit (51) zu einer Auslagerungseinheit (52); und
zwischen dem ersten und dem zweiten Schritt, einen Schritt des Lösens der Entladeeinrichtung (36) von dem Transportmechanismus (20) und des Anbringens der Ladeeinrichtung (31) an dem Transportmechanismus (20), um einen zusätzlichen zu formenden Gegenstand in die Formungseinheit (40) zu laden, um den zusätzlichen Gegenstand mit Harz zu formen.

## Revendications

1. Dispositif de moulage de résine (100) qui assure le moulage en résine d'un objet à mouler, comprenant :
une unité de moulage (40) comportant un moule (41), dans lequel le moule (41) est configuré de manière à réaliser un moulage de résine ;
**caractérisé par**
un mécanisme de transport (20) qui est configuré de manière à se déplacer linéairement et en alternance suivant chacune de trois directions axiales orthogonales ;
un kit de chargement (31) qui est lié de manière amovible au mécanisme de transport (20) ; et
un kit de déchargement (36) qui est lié de manière amovible au mécanisme de transport (20),
dans lequel le mécanisme de transport (20) et le kit de chargement (31) sont configurés de telle sorte que, dans un état dans lequel le kit de déchargement (36) n'est pas relié au mécanisme de transport (20) et le kit de chargement (31) est relié au mécanisme de transport (20), l'objet à mouler est chargé dans l'unité de moulage (40) par le mécanisme de transport (20) et le kit de chargement (31),
dans lequel le mécanisme de transport (20) et le kit de déchargement (36) sont configurés de telle sorte que, dans un état dans lequel le kit de chargement (31) n'est pas lié au mécanisme de transport (20) et le kit de déchargement (36) est lié au mécanisme de transport (20), après que l'objet à mouler a été moulé dans l'unité de moulage afin de former un objet moulé (40), l'objet moulé est déchargé à partir de l'unité de moulage (40) par le mécanisme de transport (20) et le kit de déchargement (36).

2. Dispositif de moulage de résine selon la revendication 1, comprenant, en outre :
une section d'agencement de kit dans laquelle les kits de chargement et de déchargement sont agencés de manière séparée du mécanisme de transport ;
une unité d'alimentation dans laquelle est agencé l'objet à mouler qui doit être chargé dans l'unité de moulage ; et
une unité d'éjection dans laquelle est agencé l'objet moulé, qui est déchargé à partir de l'unité de moulage, dans lequel
lorsque l'unité de moulage (40) et la section d'agencement de kit (30) sont vues sur une vue en plan, l'unité de moulage (40) et la section d'agencement de kit (30) sont alignées dans une première direction axiale (A1), et l'unité d'alimentation (10) et l'unité d'éjection (50) sont agencées sur des côtés opposés dans une seconde direction axiale (A2) orthogonale à la première direction axiale (A1), la section d'agencement de kit (30) étant interposée entre ces dernière.

3. Dispositif de moulage de résine selon la revendication 2, dans lequel l'objet à mouler comporte un substrat sur lequel un composant électronique est monté,
l'unité d'alimentation (10) comporte une unité interne au magasin (11) qui reçoit le substrat, et une unité d'alignement (19) dans laquelle le substrat est positionné et agencé,
l'unité interne au magasin (11) et l'unité d'alignement (19) sont alignées dans la première direction axiale (A1),
l'unité interne au magasin (11) et l'unité de moulage (40) sont alignées dans la seconde direction axiale (A2), et
l'unité d'alignement (19) et la section d'agencement de kit (30) sont alignées dans la seconde direction axiale (A2).

4. Dispositif de moulage de résine selon la revendication 3, comprenant, en outre, un circuit de transport (16), dans lequel
le circuit de transport (16) est agencé entre l'unité interne au magasin (11) et l'unité d'alignement (19), et le substrat provenant de l'unité interne au magasin (11) est transporté dans la première direction axiale (A1) le long du circuit de transport (16),
le mécanisme de transport (20) comporte
un premier corps principal (21) qui est configuré de manière à présenter un mouvement alternatif dans la première direction axiale (A1),
un connecteur (29) qui est agencé sur un côté inférieur du premier corps principal (21) et permet de lier le kit de chargement (31) et le kit de déchargement (36) de manière amovible par rapport à ce dernier,
un second corps principal (22) qui supporte le premier corps principal (21), et
une unité d'entraînement (23) qui supporte le second corps principal (22) par le dessous et provoque un mouvement alternatif du second corps principal (22) dans la seconde direction axiale (A2),
l'unité d'entraînement (23) s'étend au moins dans la seconde direction axiale (A2) entre une première position (P1) située sur un côté opposé, dans la première direction axiale (A1),à l'unité de moulage (40), la section d'agencement de kit (30) étant interposée entre-elles, et une seconde position (P2) située sur un côté opposé, dans la première direction axiale (A1), à l'unité interne au magasin (11), l'unité d'alignement (19) étant interposée entre-elles, et
le second corps principal (22) comporte une partie (22a) située sur un côté de l'unité d'alimentation (10) dans la seconde direction axiale (A2) et supportée sur une forme de poutrelle en porte-à-faux par l'unité d'entraînement (23) de telle sorte que le second corps principal (22) peut être situé sur le circuit de transport (16).

5. Dispositif de moulage de résine selon l'une quelconque des revendications 1 à 4, comprenant, en outre, un conduit d'aspiration (55), dans lequel
le mécanisme de transport (20) comporte une unité de nettoyage (26) destinée à nettoyer le moule (41),
lorsque le mécanisme de transport (20) est configuré de manière à se déplacer une direction afin d'entrer dans l'unité de moulage (40) et d'en sortir, le conduit d'aspiration (55) peut être dans un état couplé dans lequel le conduit d'aspiration (55) est couplé à l'unité de nettoyage (26), et
avant que le mécanisme de transport (20) soit entré dans l'unité de moulage (40) et après qu'il soit sorti de celle-ci lorsque le mécanisme de transport (20) est configuré afin de se déplacer dans une direction coupant la direction dans laquelle le mécanisme de transport (20) entre dans l'unité de moulage (40) et en sort, le conduit d'aspiration (55) est dans un état découplé dans lequel le conduit d'aspiration (55) est découplé de l'unité de nettoyage (26).

6. Procédé d'utilisation du dispositif de moulage de résine (100) selon l'une quelconque des revendications 1 à 5 destiné à assurer le moulage en résine d'un objet à mouler afin de fabriquer un produit moulé en résine, le procédé étant **caractérisé par** les étapes suivantes :
de chargement de l'objet à mouler dans l'unité de moulage (40) par le mécanisme de transport (20) et le kit de chargement (31) ;
de séparation du kit de chargement (31) par rapport au mécanisme de transport (20) et de fixation du kit de déchargement (36) sur le mécanisme de transport (20) ; et
après que l'objet à mouler a été moulé dans l'unité de moulage afin de former un objet moulé (40), de déchargement de l'objet moulé de l'unité de moulage (40) par le mécanisme de transport (20) et le kit de déchargement (36).

7. Procédé de fabrication d'un produit moulé en résine selon la revendication 6, comprenant :
une première étape de déchargement de l'objet moulé à partir de l'unité de moulage (40) vers une unité d'ébavurage (51) par le kit de déchargement (36) ;
après que l'objet moulé a été ébavuré dans l'unité d'ébavurage (51), une seconde étape de transport de l'objet moulé ébavuré à partir de l'unité d'ébavurage (51) vers une unité externe au magasin (52) ; et
entre les première et deuxième étapes, une étape de séparation du kit de déchargement (36) du mécanisme de transport (20) et de liaison du kit de chargement (31) au mécanisme de transport (20) afin de charger un objet supplémentaire à mouler dans l'unité de moulage (40) de manière à mouler en résine l'objet supplémentaire.
